# EUROPEAN PATENT APPLICATION

(11) **EP 2 903 388 A1**
(43) Date of publication of application: **05.08.2015**
(21) Application number: 14305128.2
(22) Date of filing: 30.01.2014
(51) Int. Cl.: H04W 76/02, H04W 24/04

(54) **Radio link failure**

(71) Applicant: ALCATEL LUCENT, 92100 Boulogne-Billancourt (FR)
(72) Inventor: Palat, Sudeep, Swindon, Wiltshire SN5 7DJ (GB); Lim, Seau Sian, Swindon, Wiltshire SN5 7DJ (GB); Wong, Shin Horng, Swindon, Wiltshire SN5 7DJ (GB)
(74) Representative: Leppard, Andrew John

(57) **Abstract**

A wireless telecommunications network user equipment method, wireless telecommunications network user equipment and a computer program product are disclosed. The wireless telecommunications network user equipment method comprises: determining whether said user equipment experiences a radio link failure; and when it is determined that said user equipment experiences said radio link failure, selectively preventing performance of a radio resource connection re-establishment procedure. In this way, it is possible to configure user equipment so that it may selectively, or under certain circumstances, avoid performing the radio resource connection re-establishment procedure which may inevitably fail and lead to a waste of resources.

## Description

### FIELD OF THE INVENTION

The present invention relates to a wireless telecommunications network user equipment method, wireless telecommunications network user equipment and a computer program product.

### BACKGROUND

Wireless telecommunications systems are known. In a cellular system, such as the 3GPP long term evolution network, radio coverage is provided to user equipment, for example, mobile phones, in areas known as cells. Abase station is located in each cell to provide radio coverage. User equipment in each cell receives information and data from a base station and can be operable to transmit information and data to the base station.

Information and data transmitted by a base station to user equipment occurs on channels of radio carriers known as downlink channels. Information and data transmitted by user equipment to the base station occurs on channels of radio carriers known as uplink channels. Although the deployment of base stations is largely controlled or controllable by a network operator, the deployment of user equipment is not. The deployment of user equipment within a network can cause unexpected consequences.

Accordingly, it is desired to provide techniques for communicating with user equipment in a network.

### SUMMARY

According to a first aspect, there is provided a wireless telecommunications network user equipment method, comprising: determining whether the user equipment experiences a radio link failure; and when it is determined that the user equipment experiences the radio link failure, selectively preventing performance of a radio resource connection re-establishment procedure.

The first aspect recognises that certain types of user equipment referred to as "machine type communication" (MTC) devices exist which are low cost and are required to provide for extended coverage within a cell (i.e. lie outside the cell's normal coverage area, in a region which experiences poor radio conditions). These devices have limitations compared to normal user equipment in terms of the functionality supported. For example, extended coverage devices need many repetitions of data before data can be received by the device. This means that is takes a long period of time to send a packet of data to and from the device. Also, these devices are typically located at the very edge of the cell under poor radio frequency (RF) conditions. Accordingly, these devices may suffer from a radio link failure due to, for example, poor radio conditions. They are also normally expected to be stationary. However, it may happen, due to varying radio conditions or when the device is moved occasionally, that radio link failure may occur and the device may need to be handed over to another cell. The handover process requires many procedures and messages such as a measurement report, a handover command and measurement functions. If each of these messages take a long time to send, it is almost certainly likely that there will be a handover failure. When the radio condition changes and handover fails, the user equipment goes through a radio resource connection (RRC) re-establishment procedure. This involves sending a re-establishment message in the new cell where the user equipment is located after the handover failure and involves the network performing subsequent reconfiguration of the user equipment in the new target cell. This procedure involves several messages including a random access channel (RACH) procedure. If the target cell has not been prepared, which may we also be true if measurement report and associated messages also fail to be transmitted in time, then the re-establishment procedure will fail and the device will have to perform a subsequent non-access stratum (NAS) recovery procedure in order to get service.

Accordingly, the first aspect recognises that, for MTC devices or other user equipment in these circumstances, each message is costly since it has to be repeated many times to get through and may in any event inevitably lead to failure. Hence, performing the re-establishment procedure uses a lot of resources and is wasteful.

Accordingly, a user equipment method may be provided. The method may comprise the step of determining whether the user equipment experiences or is experiencing a radio link failure. The method may also comprise the step of selectively preventing the radio resource connection re-establishment procedure from being performed when it is determined that the user equipment experiences radio link failure. In this way, it is possible to configure user equipment so that it may selectively, or under certain circumstances, avoid performing the RRC re-establishment procedure which may inevitably fail and lead to a waste of resources.

In one embodiment, the step of determining comprises determining whether the user equipment experiences the radio link failure when operating in the extended coverage mode and when it is determined that the user equipment experiences the radio link failure when operating in the extended coverage mode, the step of selectively preventing comprises selectively preventing performance of the radio resource connection re-establishment procedure. Accordingly, the user equipment may be configured to prevent the performance of the radio resource connection re-establishment procedure when operating in an extended coverage mode.

In one embodiment, the step of selectively preventing comprises performing a non-access stratum recovery procedure instead of the radio resource connection re-establishment procedure. Accordingly, instead of performing the radio resource connection re-establishment procedure the user equipment may instead perform a non-access stratum recovery procedure at some point in time thereafter.

In one embodiment, the step of determining comprises determining whether an instruction has been received from a network node instructing the user equipment to prevent performance of the radio resource connection re-establishment procedure and the step of selectively preventing comprises performing the non-access stratum recovery procedure instead of the radio resource connection re-establishment procedure in response to the instruction from the network node. Accordingly, the user equipment may be selectively configured to bypass the radio resource connection re-establishment procedure or not, in response to or as a result of an earlier instruction from the network (it will be appreciated that such an instruction may be provided a substantial period of time prior to a subsequent radio link failure occurring). Also, the performance of the non-access stratum recovery procedure does not necessarily need to occur immediately in place of the radio resource connection re-establishment procedure, but may be delayed.

In one embodiment, the step of selectively preventing comprises remaining in an idle mode prior to performing a non-access stratum recovery procedure instead of the radio resource connection re-establishment procedure. Accordingly, the user equipment may remain or stay in an idle mode should the radio link failure occur whilst in the idle mode prior to subsequently performing the non-access stratum recovery procedure.

In one embodiment, the step of determining comprises determining whether the user equipment has no uplink data for transmission and the step of selectively preventing comprises remaining in the idle mode whilst the user equipment has no uplink data for transmission. Accordingly, should the user equipment have no data for transmission then it may remain in that idle mode until it has data for transmission and only then perform the non-access stratum recovery procedure.

In one embodiment, the step of selectively preventing comprises performing the non-access stratum recovery procedure instead of the radio resource connection re-establishment procedure when the user equipment has uplink data for transmission. Accordingly, when the user equipment has data for transmission then it may bypass the radio resource connection re-establishment procedure and perform the non-access stratum recovery procedure instead.

In one embodiment, the step of determining comprises determining whether the user equipment is in one of an inactive state and a discontinuous receive state and the step of selectively preventing comprises remaining in the idle mode whilst the user equipment is in one of the inactive state and the discontinuous receive state. Accordingly, the user equipment may also remain in an idle mode and not yet perform the non-access stratum recovery procedure when the user equipment is inactive or in a non-reception period of the discontinuous receive state since there is no traffic to send or receive.

In one embodiment, the step of selectively preventing comprises performing the non-access stratum recovery procedure instead of the radio resource connection re-establishment procedure when the user equipment leaves one of the inactive state and the discontinuous receive state. Accordingly, the user equipment may bypass the radio resource connection re-establishment procedure and perform the non-access stratum recovery procedure when the user equipment becomes active or enters the reception period of the discontinuous receive state.

In one embodiment, the step of determining comprises determining whether an idle instruction has been received from a network node instructing the user equipment to remain in the idle mode prior to performing a non-access stratum recovery procedure and the step of selectively preventing comprises remaining in an idle mode prior to performing a non-access stratum recovery procedure instead of the radio resource connection re-establishment procedure. Accordingly, the network may configure the user equipment to remain or not in the idle mode when a radio link failure occurs (it will be appreciated that such an instruction may be provided a substantial period of time prior to a subsequent radio link failure occurring).

In one embodiment, the step of determining comprises determining whether a cell prepared message has been received from a network node informing the user equipment that at least one cell has been prepared for the user equipment and the step of selectively preventing comprises selectively performing the radio resource connection re-establishment procedure. Accordingly, when the user equipment is informed that cells have been prepared for handover then the user equipment may perform the radio resource connection re-establishment procedure.

In one embodiment, the step of determining comprises determining that the user equipment is operating in the extended coverage mode when configured to operate in the extended coverage mode by a network node (it will be appreciated that such an configuration may occur a substantial period of time prior to a subsequent radio link failure occurring).

In one embodiment, the step of determining comprises determining that the user equipment is operating in the extended coverage mode when transmission of a measurement report fails.

In one embodiment, the step of determining comprises determining whether an instruction has been received from a network node instructing the user equipment to perform the radio resource connection re-establishment procedure and the step of selectively preventing comprises performing the radio resource connection re-establishment procedure in response to the instruction from the network node (it will be appreciated that such an instruction maybe provided a substantial period of time prior to a subsequent radio link failure occurring).

According to a second aspect, there is provided wireless telecommunications network user equipment, comprising: determining logic operable to determine whether the user equipment experiences a radio link failure; and selection logic operable, when the determining logic determines that the user equipment experiences the radio link failure, to selectively prevent performance of a radio resource connection re-establishment procedure.

In one embodiment, the determining logic is operable to determine whether the user equipment experiences the radio link failure when operating in the extended coverage mode and when it is determined that the user equipment experiences the radio link failure when operating in the extended coverage mode, the selection logic is operable to selectively prevent performance of the radio resource connection re-establishment procedure.

In one embodiment, the selection logic is operable to perform a non-access stratum recovery procedure instead of the radio resource connection re-establishment procedure.

In one embodiment, the determining logic is operable to determine whether an instruction has been received from a network node instructing the user equipment to prevent performance of the radio resource connection re-establishment procedure and the selection logic is operable to perform the non-access stratum recovery procedure instead of the radio resource connection re-establishment procedure in response to the instruction from the network node.

In one embodiment, the selection logic is operable to cause the user equipment to remain in an idle mode prior to performing a non-access stratum recovery procedure instead of the radio resource connection re-establishment procedure.

In one embodiment, the determining logic is operable to determine whether the user equipment has no uplink data for transmission and the selection logic is operable to cause the user equipment to remain in the idle mode whilst the user equipment has no uplink data for transmission.

In one embodiment, the selection logic is operable to perform the non-access stratum recovery procedure instead of the radio resource connection re-establishment procedure when the user equipment has uplink data for transmission.

In one embodiment, the determining logic is operable to determine whether the user equipment is in one of an inactive state and a discontinuous receive state and the selection logic is operable to cause the user equipment to remain in the idle mode whilst the user equipment is in one of the inactive state and the discontinuous receive state.

In one embodiment, the selection logic is operable to perform the non-access stratum recovery procedure instead of the radio resource connection re-establishment procedure when the user equipment leaves one of the inactive state and the discontinuous receive state.

In one embodiment, the determining logic is operable to determine whether an idle instruction has been received from a network node instructing the user equipment to remain in the idle mode prior to performing a non-access stratum recovery procedure and the selection logic is operable to cause the user equipment to remain in an idle mode prior to performing a non-access stratum recovery procedure instead of the radio resource connection re-establishment procedure.

In one embodiment, the determining logic is operable to determine whether a cell prepared message has been received from a network node informing the user equipment that at least one cell has been prepared for the user equipment and the selection logic is operable to perform the radio resource connection re-establishment procedure.

In one embodiment, the determining logic is operable to determine that the user equipment is operating in the extended coverage mode when configured to operate in the extended coverage mode by a network node.

In one embodiment, the determining logic is operable to determine that the user equipment is operating in the extended coverage mode when transmission of a measurement report fails.

In one embodiment, the determining logic is operable to determine whether an instruction has been received from a network node instructing the user equipment to perform the radio resource connection re-establishment procedure and the selection logic is operable to perform the radio resource connection re-establishment procedure in response to the instruction from the network node.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows the existing operation of user equipment (such as an MTC device) when it experiences a radio link failure;
Figure 2 illustrates the procedure at the MTC device according to one embodiment;
Figure 3 illustrates the operation of the MTC device according to one embodiment;
Figures 4a and 4b show embodiments where the MTC device stays in the RRC idle mode when criteria are met; and
Figure 5 illustrates another embodiment where the MTC device determines whether to perform the re-establishment procedure or to bypass the re-establishment procedure.

### DESCRIPTION OF THE EMBODIMENTS

### Overview

Before discussing the embodiments in any more detail, first an overview will be provided. Embodiments provide an arrangement where a particular type of user equipment, often referred to as so-called "machine type communication" (MTC) devices, which are located in a so-called "extended coverage region" (where the communication between a base station and the MTC device is poor), or under other circumstances where radio link failure may occur, are configured not to perform the conventional radio resource connection (RRC) re-establishment procedure after a radio link failure.

This is because communication with the MTC devices when in an extended coverage region typically requires any message to be repeated many times (and the repeated message is then combined) to enable the message to be correctly decoded. However, should a radio link failure occur (typically due to movement of the MTC device or due to poor radio conditions) then the MTC device may need to be handed over to another cell. The handover process requires many procedures and messages (such as a measurement report and handover command), together with measurement functions to be performed. If each of these messages takes a long time to send (due to the repetition requirement) it is almost certainly likely that there will be a handover failure since there is typically insufficient time to transmit each message the required number of times. Accordingly, using these resources to support a procedure which will almost inevitably fail is wasteful. Hence, such user equipment are configured in these circumstances to avoid the re-establishment procedure and instead proceed directly (but not necessarily immediately) to a Non-Access Stratum (NAS) recovery procedure.

In embodiments, to save on radio resources required for MTC devices in an extended coverage region and operating in an extended coverage mode, and to reduce the latency of accessing the network after a radio link failure, the MTC device is configured not to perform the re-establishment procedure. Instead, the MTC device is configured to go directly to the NAS recovery procedure.

The MTC device determines when it is allowed to go direct to the NAS recovery procedure based on criteria for detecting when it is within the coverage extension region. The criteria can include conditions such as detection of when it operates in the coverage extended mode for an initial connection establishment. The MTC device may also use this in conjunction with information on whether or not a measurement report was successfully sent as an indication of whether the MTC device is likely or not to succeed with an RRC re-establishment.

Even though it is determined that the user equipment has suffered a radio link failure and it is operating in the extended coverage mode, additional criteria can be used for determining whether the MTC device should nevertheless stay in an RRC idle state and delay performing the NAS recovery procedure. Such criteria for remaining in the RRC idle state include that the user equipment is not in active communication, that there is no uplink data to send, and/ or the discontinuous receive state of the MTC device. Hence, when there is no traffic to be transmitted or received, the MTC device may stay in the RRC idle state until traffic is required to be transferred.

The MTC device may be selectively configured by the network so that only MTC devices that are allowed to do so will bypass the re-establishment procedure and go directly to NAS recovery. Similarly, whether the MTC device is allowed to stay in the RRC idle state without performing even NAS recovery can also be separately configured by the network.

In one embodiment, even though the MTC device may be configured to perform NAS recovery directly instead of the re-establishment procedure, further signalling can be provided by the network to inform the MTC device of which cells are prepared (for example, intra-base station cells are always prepared), but an indication of other prepared cells may also be provided during the serving cell RRC connection procedure. The MTC device can use this information to decide whether to perform existing re-establishment procedure (i.e. continue to utilise the existing RRC re-establishment procedure if it has been indicated that the target cell has been prepared) or to perform one of the enhanced procedures (for example, perform NAS recovery directly or stay in RRC idle mode).

### RRC Re-establishment Procedure

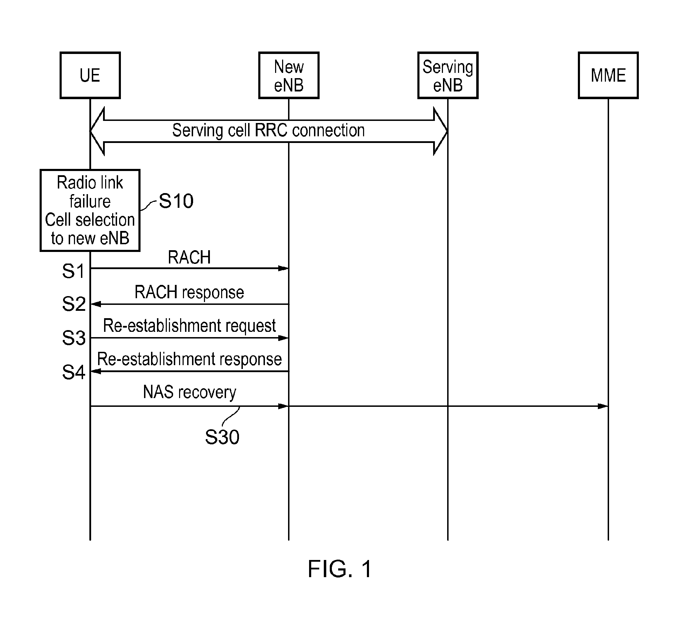

Figure 1 shows the existing operation of user equipment (such as an MTC device) when it experiences a radio link failure at step S10.

An RRC re-establishment procedure is triggered that involves messages transmitted at steps S1-S4. When the new base station (eNB) does not have a user equipment context (as is likely when a measurement report fails prior to the radio link failure) the re-establishment procedure is rejected by the new base station.

The user equipment then performs the NAS recovery procedure at step S30.

### RRC Re-establishment Procedure Bypass

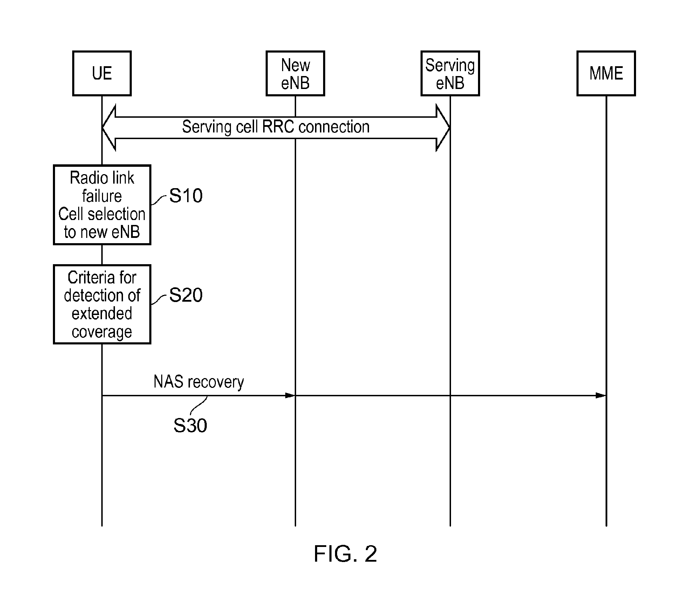

Figure 2 illustrates the procedure at the MTC device according to one embodiment. As can be seen, the MTC device, at step S10, detects that a radio link failure has occurred and that cell reselection to the new base station should occur.

However, at step S20, it is determined that the MTC device is in the extended coverage region using any of the criteria mentioned above. Previously, (typically following or during the serving cell RRC connection procedure, but prior to radio link failure) the MTC device will have been configured to be permitted to to go directly to the NAS recovery procedure on detection of radio link failure.

Accordingly, at step S30, the user equipment is permitted to go directly to the NAS recovery procedure on detection of the radio link failure, bypassing the RRC re-establishment procedure when the criteria for extended coverage are met.

### RRC Re-establishment Procedure Bypass - Measurement Report Failure

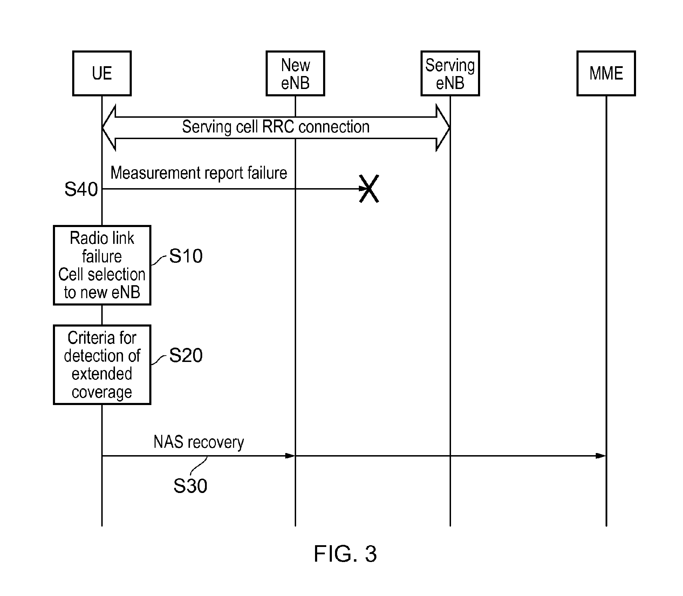

Figure 3 illustrates the operation of the MTC device according to one embodiment. In this embodiment, the MTC device uses the fact that the measurement report was not successfully transmitted at step S40, together with the criteria that the MTC device is in extended coverage, to determine to proceed directly to the NAS recovery procedure at step S30.

### RRC Re-establishment Procedure Bypass - RRC idle

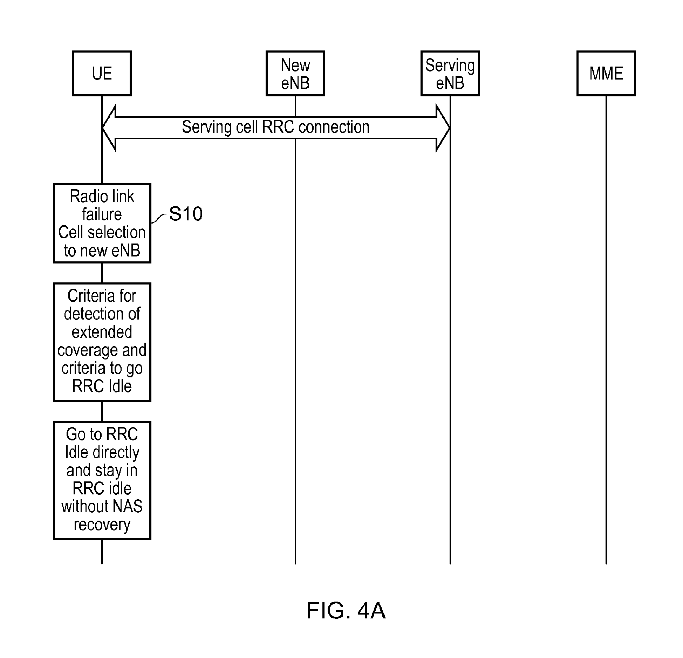

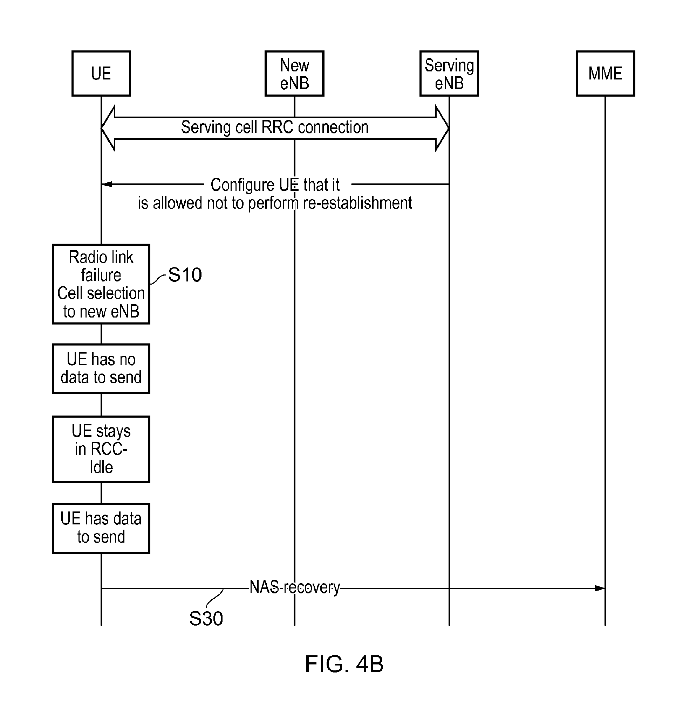

Figures 4a and 4b show other embodiments where the MTC device stays in the RRC idle mode when criteria are met. In these embodiments, the MTC device does not perform the re-establishment procedure on radio link failure at step S10, but also does not perform the NAS recovery procedure.

The criteria to stay in the RRC idle mode may be specified in addition to the criteria not to perform RRC re-establishment. This criteria could be that the MTC device has no uplink data to send, that the MTC device was not in active communication, or that the MTC device was in discontinuous receive (DRx) mode. Should the MTC device then have uplink data to send, need to be in active communication or need to receive downlink data, then the MTC device may then initiate the NAS recovery procedure.

### RRC Re-establishment Procedure - Selective Use

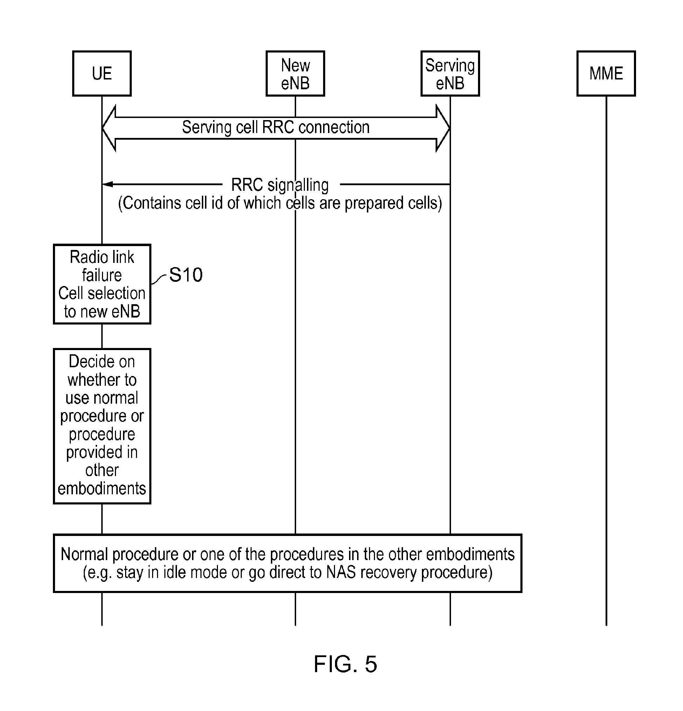

Figure 5 illustrates another embodiment where the MTC device determines, based on information provided from the network regarding the cells that have been prepared, whether to perform the re-establishment procedure or to bypass the re-establishment procedure as set out in any of the embodiments mentioned above. In the situation where the cells have been prepared, the RRC re-establishment procedure may be successful since those cells will have been provided with context information.

Accordingly, it can be seen that embodiments provide an improved recovery procedure for machine-type devices or other user equipment after a radio link failure which avoids wasting resources trying to utilise the re-establishment procedure which will lead to failure.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network user equipment method, comprising:
determining whether said user equipment experiences a radio link failure; and
when it is determined that said user equipment experiences said radio link failure, selectively preventing performance of a radio resource connection re-establishment procedure.

2. The method of claim 1, wherein said step of determining comprises determining whether said user equipment experiences said radio link failure when operating in said extended coverage mode and when it is determined that said user equipment experiences said radio link failure when operating in said extended coverage mode, said step of selectively preventing comprises selectively preventing performance of said radio resource connection re-establishment procedure.

3. The method of claim 1 or 2, wherein said step of selectively preventing comprises performing a non-access stratum recovery procedure instead of said radio resource connection re-establishment procedure.

4. The method of any preceding claim, wherein said step of determining comprises determining whether an instruction has been received from a network node instructing said user equipment to prevent performance of said radio resource connection re-establishment procedure and said step of selectively preventing comprises performing said non-access stratum recovery procedure instead of said radio resource connection re-establishment procedure in response to said instruction from said network node.

5. The method of any preceding claim, wherein said step of selectively preventing comprises remaining in an idle mode prior to performing a non-access stratum recovery procedure instead of said radio resource connection re-establishment procedure.

6. The method of claim 5, wherein said step of determining comprises determining whether said user equipment has no uplink data for transmission and said step of selectively preventing comprises remaining in said idle mode whilst said user equipment has no uplink data for transmission.

7. The method of any preceding claim, wherein said step of selectively preventing comprises performing said non-access stratum recovery procedure instead of said radio resource connection re-establishment procedure when said user equipment has uplink data for transmission.

8. The method of any preceding claim, wherein said step of determining comprises determining whether said user equipment is in one of an inactive state and a discontinuous receive state and said step of selectively preventing comprises remaining in an idle mode whilst said user equipment is in one of said inactive state and said discontinuous receive state.

9. The method of claim 8, wherein said step of selectively preventing comprises performing said non-access stratum recovery procedure instead of said radio resource connection re-establishment procedure when said user equipment leaves one of said inactive state and said discontinuous receive state.

10. The method of any preceding claim, wherein said step of determining comprises determining whether an idle instruction has been received from a network node instructing said user equipment to remain in said idle mode prior to performing a non-access stratum recovery procedure and said step of selectively preventing comprises remaining in an idle mode prior to performing a non-access stratum recovery procedure instead of said radio resource connection re-establishment procedure.

11. The method of any preceding claim, wherein said step of determining comprises determining whether a cell prepared message has been received from a network node informing said user equipment that at least one cell has been prepared for said user equipment and said step of selectively preventing comprises selectively performing said radio resource connection re-establishment procedure.

12. The method of any preceding claim, wherein said step of determining comprises determining that said user equipment is operating in said extended coverage mode when configured to operate in said extended coverage mode during by a network node.

13. The method of any preceding claim, wherein said step of determining comprises determining whether an instruction has been received from a network node instructing said user equipment to perform said radio resource connection re-establishment procedure and said step of selectively preventing comprises performing said radio resource connection re-establishment procedure in response to said instruction from said network node.

14. Wireless telecommunications network user equipment, comprising:
determining logic operable to determine whether said user equipment experiences a radio link failure; and
selection logic operable, when said determining logic determines that said user equipment experiences said radio link failure, to selectively prevent performance of a radio resource connection re-establishment procedure.

15. A computer program product operable, when executed on a computer, to perform the method steps of any one of claims 1 to 13.
